(19) Europäisches Patentamt
European Patent Office
Office européen des brevets

(11) EP 2 050 782 A1

# (12) EUROPEAN PATENT APPLICATION

(43) Date of publication:
**22.04.2009 Bulletin 2009/17**

(51) Int Cl.:
***C08K 3/26*** *(2006.01)* ***C08K 9/04*** *(2006.01)*
***C08L 71/00*** *(2006.01)* ***C08G 18/69*** *(2006.01)*

(21) Application number: **08163916.3**

(22) Date of filing: **09.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.09.2007 EP 07116474**

(71) Applicant: **SOLVAY (Société Anonyme)**
**1050 Bruxelles (BE)**

(72) Inventors:
- **Dubois, Marie-Laure**
  **13110, PORT DE BOUC (FR)**
- **Cavalier, Karine**
  **54110, DOMBASLE-SUR-MEURTHE (FR)**
- **Raboteau, Cédric**
  **13270, FOS SUR MER (FR)**

(74) Representative: **Vande Gucht, Anne et al**
**Solvay S.A.**
**Département de la Propriété Industrielle,**
**Rue de Ransbeek, 310**
**1120 Bruxelles (BE)**

## (54) Polymer compositions

(57) Composition comprising at least one silicon modified polymer or at least one isocyanate-terminated polybutadiene prepolymer, and at least one coated alkaline-earth metal filler provided with a coating composition comprising at least one coating compound selected from the group consisting of rosin acids, organic sulfonic acids; alkylsulfates; the esters, the salts or mixtures thereof. Use of the composition as adhesive or sealants. Substrate coated with the composition.

EP 2 050 782 A1

## Description

The present application claims the benefit of the European application No. 07116474.3 filed on September 14, 2007, herein incorporated by reference.

### Field of the invention

The present invention relates to polymer compositions comprising silicon modified or polybutadiene-modified polymers and to the use of such composition as adhesive and/or sealants in construction, maintenance, transportation, marine, wastewater industries. The present invention further relates to substrates coated with said polymer compositions.

### Background of the invention

Compositions containing silicon terminated organic polymers are well known in the art. These compositions are commonly used as adhesives and/or sealants, among others.

However, these compositions have problems to be improved. For instance, although these compositions have sufficient sealant properties such as adhesiveness; they show low storage stability and weather resistance in some cases.

In using such adhesives and/or sealants, there are also needs in improving the surface cure rate. The surface cure rate, generally expressed as the tack-free time, that is, the time until the surface cures to the point of not being tacky. Generally, the application of the composition must be completed before such surface curing is complete. Therefore, the shorter the tack- free time, the less time one has to work with the adhesive/sealant.

Thus, it is desired that the cured products derived from compositions containing silicon terminated organic polymers be improved in mechanical physical properties, such as increased tack-free time, while controlling other essential parameters such as viscosity.

It is a main object of the present invention to provide silicon modified polymer (MS polymer) compositions having improved tack-free time, improved dynamic durability, desirable mechanical properties, e.g., low modulus and high elongation, and high workability.

### Summary of the invention

The present invention provides a polymer composition comprising at least one silicon modified polymer (MS polymer), or at least one isocyanate-terminated polybutadiene prepolymer comprising polybutadiene and isocyanate, and at least one coated alkaline-earth metal filler provided with a coating composition comprising at least one compound selected from the group consisting of rosin acids, organic sulfonic acids; alkylsulfates; their esters, their salts or mixtures thereof. The polymer composition may also comprise optionally at least one additive, and optionally at least one catalyst.

The expression "silicon modified polymer" (or MS polymer) is intended to mean Si-hybrid polymers which are organic polymers functionalized with Si-alkoxy groups. The expression "silicon modified polymer" (or MS polymer) does not encompass polysiloxanes (or organopolysiloxanes or silicones), which consist of an inorganic silicon-oxygen backbone (...-Si-O-Si-O-Si-O-...) with organic side groups attached to the silicon atoms.

The silicon modified polymers according to the present invention are especially silyl terminated polymers. In an embodiment, said at least one silicon modified polymer is selected from the group comprising a silyl terminated polyether. In another embodiment, said silicon modified polymer is a silyl terminated polyurethane. In yet another embodiment, said silicon modified polymer is a silyl terminated epoxy resin. In yet another embodiment, said silicon modified polymer is a silyl terminated polyisobutylene. In yet another further embodiment, said silicon modified polymer is a silicon modified polyacrylate, or an acrylic-modified silyl terminated epoxy resin

In another embodiment, said at least one isocyanate-terminated polybutadiene prepolymer comprises polybutadiene and isocyanate or epoxy-urethane, wherein said polybutadiene is an epoxy modified polybutadiene or a hydroxy-terminated polybutadiene, preferably a hydroxy-terminated polybutadiene.

In an embodiment, said at least one isocyanate-terminated polybutadiene prepolymer comprises hydroxy-terminated polybutadiene and polyisocyanate selected from the group consisting of toluene diisocyanate (TDI), 1,5-naphthalene diisocyanate, phenylene diisocyanate, diphenyl methane diisocyanate (MDI), xylene diisocyanate, isophorone diisocyanate (IPDI), and mixtures thereof.

The present invention uses coated alkaline-earth metal filler provided with a coating composition comprising at least one compound as defined herein, in the preparation of polymer composition. It is understood that the term "coated alkaline-earth metal filler" refers to an alkaline-earth metal filler provided with a coating composition comprising at least one compound as defined herein.

In an embodiment, the alkaline-earth metal filler is selected from the group comprising calcium carbonate, strontium carbonate, barium carbonate, magnesium carbonate, calcium silicate, magnesium silicate, calcium-surface-treated siliceous sand, barium sulfate, anhydrous gypsum, magnesium hydroxide, magnesium oxide, calcium phosphate powder, and mixtures of at least two thereof. Preferably, the alkaline-earth metal is calcium carbonate, strontium carbonate, or barium carbonate, more preferably, calcium carbonate.

The coating composition in the polymer composition according to the invention may further comprise at least one aliphatic carboxylic acid, preferably at least one fatty acid. Said coating composition may also comprise at least one surfactant.

The polymer compositions according to the invention are particularly suitable as adhesive and/ or sealant. They can be used for construction, maintenance, transportation, marine, wastewater industries.

The present invention also provides at least one substrate coated with a polymer composition according to the present invention.

The compositions of the present invention provide an improvement of adhesion with all kinds of substrates (concrete, glass, polymethylmethacrylate, ....) and of the sealing properties. They can be tailored to control the Young modulus, to control the viscosity and thixotropy of said composition. The compositions show an improvement of strain at break, they show good storage stability and heat resistance.

Detailed description of the invention

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The inventors have surprisingly found that by combining silicon modified polymers with a coated alkaline-earth metal filler, such as rosin coated calcium carbonate, or organic sulfonic acids or alkylsulfates coated calcium carbonate, a polymer composition was obtained which presented improved rheological and mechanical properties compared to prior art silicon modified polymer compositions.

The inventors have also surprisingly found that by combining an isocyanate-terminated polybutadiene prepolymer with a coated alkaline-earth metal filler, such as rosin coated calcium carbonate, or organic sulfonic acids or alkylsulfates coated calcium carbonate, a polymer composition was obtained which presented improved rheological and mechanical properties compared to prior art polyurethane polymer compositions.

It is understood herein that when the composition according to the invention comprise isocyanate-terminated polybutadiene prepolymer and a coated alkaline-earth metal filler, said isocyanate-terminated polybutadiene polymer composition is obtained by reacting hydroxy-terminated polybutadiene polymer with at least one isocyanate. The isocyanate caps the hydroxyl groups of the polybutadiene to form urethane linkages.

The coated alkaline-earth metal filler can be selected from the group comprising coated calcium carbonate, coated magnesium carbonate, coated strontium carbonate, coated barium carbonate, coated calcium silicate, coated magnesium silicate, coated calcium-surface-treated siliceous sand, coated barium sulfate, coated anhydrous gypsum, coated magnesium hydroxide, coated magnesium oxide, coated calcium phosphate powder, and mixtures of at least two thereof. Preferably, said coated alkaline-earth metal is coated calcium carbonate, which can be functionalized or not. In an embodiment, said coated alkaline-earth metal filler, for example coated calcium carbonate, is in an amount ranging from 1 to 90% by weight of the polymer composition, preferably from 3 to 85 %, more preferably from 5 to 80%.

In an embodiment, the coated alkaline-earth metal filler is provided with a coating composition comprising at least one compound selected from rosin acid, an ester or a salt (for example sodium, ammonium or potassium) thereof. The rosin coating composition can comprise nearly pure rosin acid or rosin acid with a low percentage of pines oil often present in the raw material. The rosin can be in solid state or in emulsion liquid with different percentages of TORA. The rosin acid can be selected from the group consisting of levopimaric acid, neoabietic acid, palustric acid, abietic acid, dehydroabietic acid, mixtures thereof or salts derived therefrom. The rosin acid can be in an amount ranging from 1% to 100 % by weight of the coating composition (i.e. from 1% to 100 % by weight of the total organic matter), preferably from 5 to 100%, more preferably from 10 to 100%.

In another embodiment, the coating composition comprises at least one compound selected from the group consisting of organic sulfonic acids; alkylsulfates and the salts thereof.

For the purpose of the specification, the term "organic sulfonic acids" encompasses any compound bearing at least one group $-SO_3H$ or a salt thereof and at least one carbon atom covalently linked the sulfur of said $-SO_3H$ group. Thus, organic sulfonic acids may contain further functional groups, such as esters. Particularly, organic sulfonic acids encompass alkylsulfo-succinates such as dioctylsulfosuccinate and its sodium salt.

The term "alkyl" by itself or as part of another substituent refers to a hydrocarbyl radical of formula $C_nH_{2n+1}$ wherein n is a number greater than or equal to 1. For the purpose of the specification, the term "alkyl" denotes, if not otherwise specified, linear or branched alkyl chains, preferably having 1 to 30, more preferably 1 to 18, most preferably 1 to 12 and in particular 1 to 6 carbon atoms, such as methyl, ethyl, n-propyl, i-propyl, n-butyl, sec-butyl, iso-butyl, tert-butyl, n-pentyl, i-pentyl, n-hexyl, i-hexyl, n-heptyl, i-heptyl, n-octyl, i-octyl, n-nonyl, i-nonyl, n-decyl, i-decyl, n-undecyl, i-undecyl, n-dodecyl, i-dodecyl and the like.

The term "cycloalkyl group" as used herein is a cyclic alkyl group, that is to say, a monovalent, hydrocarbyl group having 1, 2, or 3 cyclic structure. Cycloalkyl includes all saturated or partially saturated (containing 1 or 2 double bonds) hydrocarbon groups containing 1 to 3 rings, including monocyclic, bicyclic, or polycyclic alkyl groups. Cycloalkyl groups may comprise 3 or more carbon atoms in the ring and generally, according to this invention comprise from 3 to 10, more preferably from 3 to 8 carbon atoms still more preferably from 3 to 6 carbon atoms. Examples of cycloalkyl groups are cyclopropyl, cyclobutyl, cyclopentyl, cyclohexyl, cycloheptyl, cyclooctyl, cyclononyl, and cyclodecyl with cyclopropyl being particularly preferred. When the suffix "ene" is used in conjunction with a cyclic group, this is intended to mean the cyclic group as defined herein having two single bonds as points of attachment to other groups.

Where alkyl groups as defined are divalent, i.e., with two single bonds for attachment to two other groups, they are termed "alkylene" groups. Non-limiting examples of alkylene groups includes methylene, ethylene, methylmethylene, trimethylene, propylene, tetramethylene, ethylethylene, 1,2-dimethylethylene, pentamethylene, and hexamethylene.

In this embodiment, the coating composition comprises at least one sulfur organic compound selected from organic sulfonic acids; alkylsulfates and the salts thereof. Preferably, the coating composition comprises a compound selected from the group consisting of alkylsulfonic acids, arylsulfonic acids, arylalkylsulfonic acids, alkylsulfosuccinates, alkylsulfates and the salts thereof.

For the purpose of the specification, the term "aryl" denotes an aromatic mono- or bicyclic hydrocarbon comprising 6 to 10 carbon atoms, such as phenyl and naphthyl, optionally substituted with halogen. The aromatic ring may optionally include one to three additional rings (either cycloalkyl, heterocyclyl, or heteroaryl) fused thereto. Non-limiting examples of aryl comprise phenyl, biphenylyl, biphenylenyl, 5- or 6-tetralinyl, 1-, 2-, 3-, 4-, 5-, 6-, 7-, or 8-azulenyl, 1- or 2-naphthyl, 1-, 2-, or 3-indenyl, 1-, 2-, or 9-anthryl, 1- 2-, 3-, 4-, or 5-acenaphtylenyl, 3-, 4-, or 5-acenaphtenyl, 1-, 2-, 3-, 4-, or 10-phenanthryl, 1- or 2-pentalenyl, 1, 2-, 3-, or 4-fluorenyl, 4- or 5-indanyl, 5-, 6-, 7-, or 8-tetrahydronaphthyl, 1,2,3,4-tetrahydronaphthyl, 1,4-dihydronaphthyl, dibenzo[a,d]cylcoheptenyl, and 1-, 2-, 3-, 4-, or 5-pyrenyl.

The term "arylene" as used herein is intended to include divalent carbocyclic aromatic ring systems such as phenylene, biphenylylene, naphthylene, anthracenylene, phenanthrenylene, fluorenylene, indenylene, pentalenylene, azulenylene, and the like. Arylene is also intended to include the partially hydrogenated derivatives of the carbocyclic systems enumerated above. Non-limiting examples of such partially hydrogenated derivatives are 1,2,3,4-tetrahydronaphthylene, 1,4-dihydronaphthylene, and the like.

For the purpose of the specification, the term "arylalkyl" or "aralkyl" denotes an "alkyl" residue as defined above covalently linked to an "aryl"-residue as defined above, such as $-CH_2C_6H_5$, $-CH_2CH_2C_6H_5$, $-CH_2CH_2CH_2C_6H_5$, and the like.

Whenever the term "substituted" is used in the present invention, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation to a useful degree of purity from a reaction mixture, and formulation into a therapeutic agent. Where groups may be optionally substituted, such groups may be substituted with once or more, and preferably once or twice. Substituents may be selected from, for example, the group comprising alkyl, aryl, cycloalkyl, halo, hydroxyl, oxo, nitro, amido, carboxy, amino, cyano haloalkoxy, and haloalkyl.

As used in the specification and the appended claims, the singular forms "a", "an", and "the" include plural referents unless the context clearly dictates otherwise. By way of example, "a compound" means one compound or more than one compound.

In a preferred embodiment the coating agent comprises a compound represented by general formula (I-A) or (I-B)

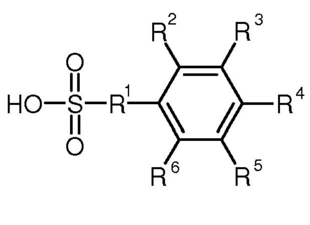

(I-A)

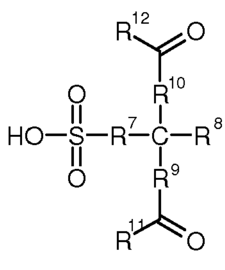

(I-B)

wherein

$R^1$, $R^7$, $R^9$ and $R^{10}$ are independently a single bond, -O-, $-C_1-C_{18}$-alkylene- or - $C_2-C_{18}$-alkenylene- (wherein in the

alkylene- or in the alkenylene-chain optionally 1, 2 or 3 $-CH_2-$ groups may be replaced by -O-);
$R^2$, $R^3$, $R^4$, $R^5$ and $R^6$ are independently -H, $-C_1-C_{18}$-alkyl (wherein in the alkyl-chain optionally 1, 2 or 3 $-CH_2-$ groups may be replaced by -O-), -OH, -F, -Cl, -CN, $-CO_2H$, $-CO-C_1-C_6$-alkyl, $-CO_2-C_1-C_6$-alkyl, $-O-CO-C_1-C_6$-alkyl, $-NO_2$, $-NH_2$, $-NH-C_1-C_6$-alkyl or $-N(C_1-C_6\text{-alkyl})_2$;
$R^8$ is -H or $-C_1-C_6$-alkyl; and
$R^{11}$ and $R^{12}$ are independently -H, $-C_1-C_{18}$-alkyl (wherein in the alkyl-chain optionally 1, 2 or 3 $-CH_2-$ groups may be replaced by -O-), $-NH_2$, $-NH-C_1-C_6$-alkyl or $-N(C_1-C_6\text{-alkyl})_2$.

For the purpose of the specification, the term "alkylene" denotes bivalent linear or branched alkylene chains, such as $-CH_2-$, $-CH_2CH_2-$, $-CH_2CH_2CH_2-$, $-CH_2CH_2CH_2CH_2-$, $-CH(CH_3)-$, $-CH_2CH(CH_3)-$, $-CH_2CH_2CH(CH_3)-$, $-CH_2CH(CH_3)CH_2-$, and the like.

For the purpose of the specification, the term "alkenylene" denotes bivalent linear or branched alkenylene chains, such as -CH=CH-, $-CH_2CH=CH-$, $-CH_2CH_2CH=CH-$, $-CH=C(CH_3)-$, $-CH_2CH=C(CH_3)-$, $-CH=C(CH_3)CH_2-$, and the like.

Preferably, in the compound represented by general formula (I-A) or (I-B) $R^1$, $R^7$, $R^9$ and $R^{10}$ are independently a single bond or $-C_1-C_6$-alkylene- (wherein in the alkylene-chain optionally 1 or 2 $-CH_2-$ groups may be replaced by -O-);
$R^2$, $R^3$, $R^4$, $R^5$ and $R^6$ are independently -H or $-C_1-C_{18}$-alkyl (wherein in the alkyl-chain optionally 1, 2 or 3 $-CH_2-$ groups may be replaced by -O-); $R^8$ is -H or $-C_1-C_6$-alkyl; and
$R^{11}$ and $R^{12}$ are independently $-C_1-C_{12}$-alkyl (wherein in the alkyl-chain optionally 1, 2 or 3 $-CH_2-$ groups may be replaced by -O-).

More preferably, in the compound represented by general formula (I-A) or (I-B)
$R^1$ and $R^7$ are a single bond;
$R^2$, $R^3$, $R^5$ and $R^6$ are -H;
$R^4$ is -H or $-C_1-C_6$-alkyl;
$R^8$ is -H;
$R^9$ and $R^{10}$ are independently a single bond or $-CH_{2-}$; and
$R^{11}$ and $R^{12}$ are independently $-C_1-C_{12}$-alkoxy.

For the purpose of the specification, the term "alkoxy" denotes an "alkyl" residue as defined above covalently linked to an oxygen atom, such as $-OCH_3$, $-OCH_2CH_3$, and the like.

In another preferred embodiment, the coating composition comprises one or more compounds selected from the group consisting of benzene sulfonic acid, toluene sulfonic acid, dioctylsulfosuccinate and the salts thereof.

The inventors of the present invention have also found that when the coating composition comprises a compound of formula (I-A), wherein $R^1$ is a single bond; $R^2$, $R^3$, $R^5$ and $R^6$ are -H; and $R^4$ is -H or $-C_1-C_{10}$-alkyl, preferably - H or $-C_1-C_6$-alkyl; coated particles exhibiting excellent properties may also be obtained with precipitated calcium carbonate. Preferably, the coating agent comprises benzene sulfonic acid or toluene sulfonic acid.

The compound in said coating composition can be employed alone or in mixture with organic acids and/or with at least one surfactant.. Said organic acids can be selected from carboxylic, sulfonic and phosphonic acids. Carboxylic acids can be aromatic or aliphatic, with aliphatic carboxylic acids being preferred.

The aliphatic carboxylic acid may be any linear or branched or cyclic (alicyclic), substituted or non substituted, saturated or unsaturated, carboxylic acid. The aliphatic carboxylic acid can have a number of carbon atoms greater than or equal to 4, preferably greater than or equal to 8, more preferably greater than or equal to 10. The aliphatic carboxylic acid has generally a number of carbon atoms lower than or equal to 32, preferably lower than or equal to 28, more preferably lower than or equal to 24 and most preferably lower than or equal to 22.

In an embodiment, the coating composition comprises at least one aliphatic carboxylic acid selected from the group of substituted, non substituted, saturated and unsaturated fatty acids or mixture thereof. More preferably it is selected from the group consisting of caproic acid, caprylic acid, capric acid, lauric acid, myristic acid, palmitic acid, stearic acid, iso-stearic acid, hydroxystearic acid, arachidic acid, behenic acid, lignoceric acid, cerotic acid, montanic acid, melissic acid, myristoleic acid, palmitoleic acid, petroselinic acid, petroselaidic acid, oleic acid, elaidic acid, linoleic acid, linolelaidic acid, linolenic acid, linolenelaidic acid, a-eleostaeric acid, b-eleostearic acid, gadoleic acid, arachidonic acid, erucic acid, brassidic acid and clupanodonic acid, mixtures thereof or salts derived therefrom. Mixtures containing mainly palmitic, stearic and oleic acids are more preferred. Mixtures called "stearin" which consist of about 30 - 60 wt % stearic acid, of about 40 -60 wt % palmitic acid and of about 0 - 25 wt % oleic acid are particularly preferred. Mixtures which consists of about 40 - 60 wt % palmitic acid, of about 26 - 34 wt % stearic acid and of about 10 - 20 wt % oleic acid give good results. Mixtures which consists of about 45 - 55 wt % palmitic acid, of about 45 - 55 wt % stearic acid and of about 0.5 - 2 wt % oleic acid give also good results.

In an embodiment, the coating composition is in an amount ranging from 0.1 to 15% by weight of alkaline-earth metal filler, preferably from 1 to 13% by weight of alkaline-earth metal filler, more preferably from 1 to 12% by weight of alkaline-earth metal filler, yet more preferably from 1 to 10% by weight of alkaline-earth metal filler.

The composition according to the invention comprises a coated alkaline-earth metal filler, preferably a coated

alkaline-earth metal carbonate.

The alkaline-earth metal is preferably selected from magnesium, calcium, strontium, barium and mixtures thereof. Calcium is more preferred.

The alkaline-earth metal carbonate particles of the invention can be particles of natural or synthetic alkaline-earth metal carbonate. Natural magnesium carbonate can be natural magnesite or hydromagnesite. Natural calcium carbonate can be natural calcite or aragonite, chalk or marble. Natural magnesium and calcium carbonate can occur as calcium-magnesium carbonate containing minerals like huntite and dolomite. Natural strontium carbonate can be natural strontianite. Natural barium carbonate can be natural whiterite. Synthetic alkaline-earth metal carbonates are preferred. Synthetic precipitated alkaline-earth metal carbonates are more preferred. Synthetic precipitated calcium carbonate is the most preferred.

By particles, one intends to denote crystallites or primary particles or clusters of primary particles. Crystallites or primary particles are defined as the smallest discrete particles that can be seen by Electron Microscopy analysis.

The alkaline-earth metal carbonate for use in the invention may be substantially amorphous or substantially crystalline. The term "substantially amorphous or crystalline" is intended to mean that more 50 %, in particular more than 75 % and preferably more than 90 % by weight of the alkaline-earth metal carbonate is in the form of amorphous or crystalline material when analyzed by the X-ray diffraction technique. Substantially crystalline alkaline-earth metal carbonates are preferred. Substantially crystalline calcium carbonate is preferred.

When the alkaline-earth metal carbonate is magnesium carbonate, the magnesium carbonate may consist of barringtonite, nesquehonite, lansfordite or of a mixture of at least two of these crystallographic varieties.

When the alkaline-earth metal carbonate is strontium carbonate, the strontium carbonate may consist of aragonite type, of calcite type or of a mixture of at least two of these crystallographic varieties.

When the alkaline-earth metal carbonate is barium carbonate, the barium carbonate may consist of aragonite type.

When the alkaline-earth metal carbonate is calcium carbonate, the calcium carbonate may consist of calcite, of vaterite or of aragonite or of a mixture of at least two of these crystallographic varieties. Calcium carbonate particles presenting at least partly a calcite crystallographic structure are preferred. The calcium carbonate particles presenting the calcite crystallographic structure amount generally for at least 20 % by weight of the total calcium carbonate particles, often for at least 50 %, frequently for at least 80 % and most specifically for at least 95 %.

The calcium carbonate for use in the preparation of coated calcium carbonate can exhibit various morphologies. The particles can have the form of needles, scalenohedra, rhombohedra, spheres, platelets or prisms. These forms are determined by means of Scanning Electron Microscopy. The scalenohedra and rhombohedra forms are preferred. Calcium carbonate particles presenting at least partly a rhombohedric morphology are more preferred. The calcium carbonate particles presenting the rhombohedric morphology amount generally for at least 20 % by number of the total calcium carbonate particles, often for at least 50 %, frequently for at least 80 % and most specifically for at least 95 %.

The calcium carbonate for use in the preparation of rosin coated calcium carbonate have a BET specific surface area generally greater than or equal to 1 $m^2/g$, often greater than or equal to 5 $m^2/g$, frequently greater than or equal to 10 $m^2/g$ and in particular greater than or equal to 15 $m^2/g$. A specific surface area of greater than or equal to 20 $m^2/g$ gives good results. The BET specific surface area of the coated particles is generally less than or equal to 300 $m^2/g$, often less than or equal to 150 $m^2/g$. A specific surface area of less than or equal to 150 $m^2/g$ gives good results. The specific surface area is measured by the standardized BET method (standard ISO 9277-1995).

The calcium carbonate for use in the preparation of coated calcium carbonate have generally a mean primary particle size (dp) higher than or equal to 0.010 μm, often higher than or equal to 0.030 μm, frequently higher than or equal to 0.050 μm. The mean primary particle size is generally lower than or equal to 20 μm, frequently lower than or equal to 10 μm, often lower than or equal to 1 μm and most often lower than or equal to 0.75 μm. The mean primary particle size $d_P$ is measured by the Lea -Nurse method (air permeation, Standard NFX 11-601, 1974). The $d_P$ value is obtained from the massic area ($S_M$) derived from the Lea and Nurse method by making the assumptions that all the particles are spherical, non porous and of equal diameter, and by neglecting contact surfaces between the particles.

The relationship between $d_P$ and $S_M$ is the following:

$$d_P = 6/(\rho S_M)$$

where

p is the specific mass of the calcium carbonate.

The size distribution of the calcium carbonate particles is obtained from sedimentography analysis.

The mean size of the coated particles (equal to the value of $D_{50}$ defined below; i.e. the median diameter (50% of the analyzed mass) is commonly higher than or equal to 0.030 μm, often higher than or equal to 0.070 μm, frequently

higher than or equal to 0.150 μm, specifically higher than or equal to 0.200 μm and most specifically higher than or equal to 0.350 μm. The mean size of the particles is generally lower than or equal to 20 μm, frequently lower than or equal to 10 μm, often lower than or equal to 5 μm, specifically lower than or equal to 3 μm and most specifically lower than or equal to 2 μm. $D_{50}$ is the particle size value which expresses that 50 % by volume, weight or number of the particles have a size value lower than or equal to $D_{50}$. Preferred $D_{50}$ values ranges between 0.5μm by weight to 0.7 μm by weight for rhombohedric calcitic precipitated calcium carbonate.

The calcium carbonate for use in the preparation of coated calcium carbonate can occur as clusters of primary particles, which highest dimension is generally higher than or equal to 10 nm, often higher than or equal to 20 nm, frequently higher than or equal to 50 nm, specifically higher than or equal to 80 nm and in particular higher than or equal to 140 nm. That highest dimension is generally lower than or equal to 40 μm, often lower than or equal to 4 μm and frequently lower than or equal to 0.3 μm. Those clusters exhibit a smallest dimension which is generally higher than or equal to 5 nm, often higher than or equal to 10 nm, frequently higher than or equal to 25 nm, specifically higher than or equal to 40 nm and in particular higher than or equal to 70 nm. That smallest dimension is generally lower than or equal to 10 μm, often lower than or equal to 0.7 μm and frequently lower than or equal to 0.2 μm. Those dimensions can be obtained by measuring the highest and lowest dimensions of individual particles on photographs obtained by Scanning Electron Microscopy.

Natural alkaline-earth metal carbonates for use in the invention can be processed by mechanically crushing and grading alkaline-earth metal carbonates containing ores to obtain particles adjusted to the desired size.

Synthetic alkaline-earth metal carbonate particles are usually prepared by precipitation. Precipitated magnesium carbonates may be prepared by reacting magnesium hydroxide with carbon dioxide at high pressure.

The calcium carbonate particles for use in the present invention can be obtained by any process. They can be powders, moist cakes or suspension of calcium carbonate particles obtained by any known method. Natural calcium carbonate can be processed by mechanically crushing and grading calcareous ore to obtain particles adjusted to the desired size. Synthetic calcium carbonate particles are usually prepared by precipitation. Precipitated calcium carbonate may be manufactured by first preparing a calcium oxide (quick lime) by subjecting limestone to calcination by burning a fuel, such as coke, a petroleum fuel (such as heavy or light oil), natural gas, petroleum gas (LPG) or the like, and then reacting the calcium oxide with water to produce a calcium hydroxide slurry (milk or lime), and reacting the calcium hydroxide slurry with the carbon dioxide discharged from a calcination furnace for obtaining the calcium oxide from limestone to obtain the desired particle size and shape precipitated calcium carbonate (carbonation process). Precipitation of calcium carbonate can also be carried out by adding an alkali metal carbonate starting with lime water (causticisation method) or precipitation by the addition of an alkali metal carbonate starting with solutions containing calcium chloride. Precipitated calcium carbonate obtained from the carbonation process is preferred.

Strontium and barium carbonates may be prepared by precipitating the carbonates from strontium or barium sulfide solutions with carbon dioxide. Barium carbonate may also be prepared by precipitating the carbonate from barium sulfide solutions with sodium carbonate.

The coating procedure can be performed by emulsion process, in a solvent or by using dry coating equipment and by introducing the melt resin or the emulsion base.

In an embodiment, the polymer composition according to the invention comprises at least one silicon modified polymer selected from the group comprising silyl terminated polyether, silyl terminated polyurethane, silyl terminated epoxy resin, silyl terminated polyisobutylene, and acrylic-modified silyl terminated epoxy resin.

A "silyl group" in the scope of the present invention is understood to mean a functional group of the general formula

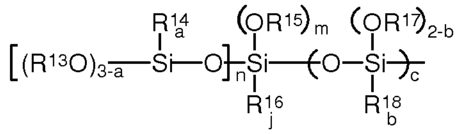

wherein $R^{13}$ to $R^{18}$, independently of one another, represents a linear or branched, saturated or unsaturated hydrocarbon group with 1 to about 24 carbon atoms, a saturated or unsaturated cycloalkyl group with 4 to about 24 carbon atoms or an aryl group with 6 to about 24 carbon atoms, "n, m and j" represent each an integer selected from 0, 1, 2 or 3, wherein m+n+j =3, "a" represents an integer selected from 0, 1, 2 or 3, "b" represents an integer selected from 0, 1, or 2 and "c" represents an integer selected from 0, 1, 2, 3, 4, 5, 6, 7, or 8. Examples of useful silyl groups include alkoxysilyls, aryloxysilyls, alkyloxyiminosilyls, oxime silyls, and aminosilyls.

In an embodiment, the composition comprises a silyl terminated polyether and a rosin coated alkaline-earth metal filler.

The silyl terminated polyether is a silyl-terminated oxyalkylene polymer. The main chain skeleton of the above-mentioned oxyalkylene polymer may comprise two or more repeating oxyalkylene units.

In the scope of the present invention, an "oxyalkylene unit" is understood to mean a unit of the general formula $-O-R^{19}-O-$, wherein $R^{19}$ stands for a linear or branched, saturated or unsaturated alkylene group having 2 to about 40 carbon atoms, a saturated or unsaturated cycloalkylene group having 4 to 18 carbon atoms or an arylene group having 6 to 24 carbon atoms, said $R^{19}$ being optionally substituted by one or more substituents selected from alkyl, aryl, or cycloalkyl.

For use as sealants or the like, in particular, polymers derived from propylene oxide as the main component are preferred. The main chain skeleton of the above-mentioned oxyalkylene polymer may contain another component, such as a urethane bond component. Said urethane bond component is not limited to any particular species but includes, for example, those derived from the reaction of an aromatic polyisocyanate such as toluene (tolylene) diisocyanate, diphenylmethane diisocyanate or xylylene diisocyanate or an aliphatic polyisocyanate such as isophorone diisocyanate or hexamethylene diisocyanate, with a polyol.

Suitable silyl terminated polyoxyalkylene comprise at least one reactive silyl group per molecule thereof, preferably from 1.1 to 5 reactive silyl groups per molecule. Suitable silyl terminated polyethers include but are not limited to high-molecular-weight oxyalkylene polymers having a number average molecular weight of not less than 6,000 and a narrow molecular weight distribution as indicated by a Mw/Mn ratio of not more than 1.6. Suitable silyl terminated polyethers include but are not limited to product names: "MS Polymer S203", "MS Polymer S303", "Silyl SAX 350", "S903", "SAT030", "SAT010", "SAX400", or "MAX450" (each produced by Kaneka Corporation) and the like. These may be used singly or in combination of two or more species. In some cases, by modifying the above-mentioned main chain component with acrylic substances, adhesion and weather resistance can be improved.

In another embodiment, the composition comprises a silyl terminated polyurethane and a coated alkaline-earth metal filler.

Suitable silyl terminated polyurethane can be any polyurethane produced by the reaction of an isocyanate functional monomer, oligomer or polymer, with a polyol, and comprises at least one silyl group.

Suitable isocyanate-functional monomers, oligomers, or polymers include, but are not limited to, bis-(4-isocyanatocyclohexyl)methane (HMDI). Other examples of isocyanate functional monomers include isophorone diisocyanate (IPDI), hexane diisocyanate (HDI), toluene diisocyanate (TDI), diphenylmethane diisocyanate (MDI), tetramethylxylene diisocyanate (TMXDI), cyclohexane diisocyanate, butane diisocyanate, trimethyl hexamethylene diisocyanate, noraboradiene diisocyanate (NDI), 4,4'-methylenebis cyclohexyl isocyanate, hydrogenated diphenylmethane-4,4'-diisocyanate, dicyclohexylmethyl diisocyanate. Examples of isocyanate functional oligomers include uretdione dimers of HDI, isocyanurate trimers of HDI, IPDI, and TDI, biuret trimers of HDI, IPDI, and TDI, and mixed copolymers thereof. Many other examples of isocyanate functional oligomers are possible, including reactions of the above mentioned isocyanate monomers, dimers, trimers or oligomers with polyols such as the range of poly(alkylene) glycols, polyesters, polybutadienes and polyacrylics. The polyol may be either one or a combination of polyester polyols, polyether polyols, or polyalkyldiene polyols, or derived from reaction of excess of such polyols, alone or in combination, with isocyanate functional compounds. A preferred polyol is polypropylene oxide based having an average molecular weight of from about 76 to about 10,000, preferably from about 500 to about 8,000.

In yet another embodiment, the composition comprises a silyl terminated epoxy resin and a coated alkaline-earth metal filler.

Non-limiting example of suitable silyl terminated epoxy resin include silyl terminated epoxidized soya oils, silyl terminated polyglycidyl ethers of phenolic resins of the novolak type, silyl terminated p-aminophenoltriglycidyl ether or silyl terminated 1,1,2,2-tetra(p-hydroxyphenyl)ethane tetraglycidyl ether, and silyl terminated epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e. bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; and 1,5-hydroxynaphthalene. Other suitable epoxy resins include silyl terminated polyglycidyl ether of a polyphenol, such as silyl terminated bisphenol A, silyl terminated hydrogenated epoxy resin based on bisphenol A, silyl terminated polyglycidyl ethers of polyhydric alcohols. A detailed list of suitable epoxide compounds which can be used for preparing silyl terminated epoxy resin can be found in the handbooks A. M. Paquin, "Epoxidverbindungen und Harze" (Epoxide Compounds and Resins), Springer Verlag, Berlin 1958, Chapter IV and H. Lee and K. Neville, "Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988.

In an embodiment, the polymer composition according to the invention comprises at least one isocyanate-terminated polybutadiene prepolymer.

In an embodiment, the isocyanate-terminated polybutadiene prepolymer are prepared by capping polybutadiene polymers with isocyanate-functional monomers, oligomers, or polymers.

Suitable polybutadiene polymers comprise epoxy-terminated polybutadiene, amino-terminated polybutadiene, carboxyl-terminated polybutadiene, hydroxyl-terminated polybutadiene, mercaptyl terminated polybutadiene, and the

like.

Suitable isocyanates have been listed above. Preferred isocyanate can be selected from toluene diisocyanate (TDI), 1,5-naphthalene diisocyanate, phenylene diisocyanate, diphenyl methane diisocyanate (MDI), xylene diisocyanate, isophorone diisocyanate (IPDI) and mixture thereof.

Preferably, the composition of the invention is prepared by mixing a polybutadiene with the coated alkaline-earth metal filler and providing the isocyanate-functional monomers, oligomers, or polymers, optionally in the presence of a suitable chain extender. Non limiting examples of suitable chain extenders include short chain or low-molecular weight alcohols such as 1,4-butanediol (BDO), ethylene glycol (EG), diethylene glycol (DEG), glycerine, trimethylol propane (TMP), 2,2,4-trimethyl pentane-1,3-diol, and 2-ethyl-1,3-hexanediol; amines; N,N-diisopropanol aniline; and the like.

Suitable additives for isocyanate-terminated polybutadiene prepolymer compositions may include cross linkers, surfactants, fire retardants, blowing agents, pigments, and fillers.

The polyurethane compositions of the invention can be provided as two-package systems, with the packages being mixed at the time of use.

The present compositions can optionally comprise an adhesion promoter. Suitable adhesion promoter include trialkoxyorganosilane compounds such as gamma-aminopropyl trimethoxy silane, (3-glycidoxypropyl) trimethoxysilane, (3-glycidoxypropyl) triethoxysilane, bis(trimethoxysilylpropyl) fumarate and the like. Other suitable adhesion promoter include polyterpene resin such as Zonarez 7055 (Arizona Chemical Co.), hydrogenated rosin methyl ester such as Hercolyn D (Hercules, Inc.), hydrogenated rosin pentaerythritol ester such as Pentalyn H (Hercules, Inc.), gamma-aminopropyltriethoxysilane such as "Silquest A-1110" (Witco-Osi), gamma-glycidoxypropyl trimethoxysilane such as "Silquest A-187" (Witco-Osi), C5/C9 tackyfier such as Norsolene, toluene sulfonamide such as Santicizer 8 (Ferro Corp.), and propoxylated bis-phenol A such as SynFac 8027 (Milliken Chemical Co.) .

The present polymer composition can optionally comprise a hardener. Examples of hardener suitable for said composition include but are not limited to amino or epoxy hardeners. Amino hardeners may include one or more of an aliphatic, cycloaliphatic amine, aromatic, araliphatic amines, imidazoline group-containing polyaminoamides based on mono or polybasic acids, as well as adducts thereof. Epoxy hardeners may include one or more of an amine epoxy hardener, a phenolic or novolak resin hardener, or a carboxylic acid anhydride hardener. These compounds are part of the general state of the art and are described, inter alia, in Lee & Neville, "Handbook of Epoxy Resins", MC Graw Hill Book Company, 1987, chapter 6-1 to 10-19.

The composition of the present invention may also comprise a catalyst. Up to about 5 % by weight of catalyst may be added to the composition, or may be added as an entirely separate component, to speed drying and curing of the compositions of the present invention. Useful catalysts include metal driers well known in the sealant field, e.g. zinc, manganese, zirconium, titanium, cobalt, iron, lead and tin containing driers. Suitable catalysts include organotin catalysts such as dibutyl tin dilaurate, dibutyl tin diacetate, organotitanates. Other suitable catalysts include acids such as organic acids, inorganic acids, organic sulfonic acids, esters of sulfuric acid and superacids.

Compositions according to the invention can be used without the addition of a solvent. However, organic solvents may be added to improve to improve flow, leveling, and appearance when applied. Exemplary solvents useful for this purpose include aromatic hydrocarbons, esters, ethers, alcohols, ketones, glycol ethers and the like.

The composition of the present invention may also contain auxiliaries or additives such as abrasion resistance improvers, absorbents, rheological modifiers, plasticizers, antifoaming agents, antifouling agents, thixotropic agents, pigments, fillers, aggregates, extenders, reinforcing agents, flow control agents, catalysts, pigment pastes, mineral oils, wetting agents, adhesion promoters, thickening agents, flame-retarding agents, antioxidants, elastomers, antisettling agents, diluents, UV light stabilizers, air release agents, solvents, dispersing aids, and mixtures thereof, additional hardeners and additional curable compounds, and mixture thereof, depending on the application. Examples of suitable additives that may be added to the coating composition may be found in 2002 Additives Guide, Paint & Coatings Magazine, April 2002, 26-80, hereby incorporated by reference. The composition may comprise from 0% about 50% by weight, for example from 0% to about 40%, 0% to about 30%, 0% to about 20% by weight of such additives.

The composition according to the invention may further comprise at least one pigment. Suitable pigments may be selected from organic and inorganic color pigments which may include titanium dioxide, carbon black, lampblack, zinc oxide, natural and synthetic red, yellow, brown and black iron oxides, toluidine and benzidine yellow, phthalocyanine blue and green, and carbazole violet, and extender pigments including ground and crystalline silica, barium sulfate, magnesium silicate, calcium silicate, mica, micaceous iron oxide, calcium carbonate, zinc powder, aluminum and aluminum silicate, aluminum paste, gypsum, feldspar and the like. The amount of pigment that is used to form the composition is understood to vary, depending on the particular composition application, and can be zero when a clear composition is desired. For example, a composition may comprise up to 50 % by weight of pigment. Depending on the particular end use, a preferred composition may comprise approximately 0 to 10 % by weight of pigment.

The present invention also relates to compositions comprising the coated particles described above and at least one silicon modified polymer. Preferably, the compositions according to the invention comprises

- the coated alkaline-earth metal filler as described herein;
- at least one silicon modified polymer,
- optionally at least one plasticizer, such as di-octylphtalate (DOP), di-isononylphtalate (DINP), Adipate, Sebacate,
- optionally at least one solvent, such as derivatives of hydrocarbons,
- optionally at least one filler, such as $TiO_2$, $SiO_2$, natural calcium carbonate,
- optionally at least one promoter, such as polyamines, polyamides,
- optionally at least one desiccant, such as CaO, and
- optionally further additives.

Preferred embodiments of the compositions according to the invention are summarized in Table 1A .

Table 1A

| **Components** | **[wt.-%]** |
|---|---|
| MS-polymer 1 (low molecular weight (MW) | 6-40% |
| MS-polymer 2 (high MW) | 0-25% |
| coated alkaline-earth metal filler | 0.01-45% |
| Pigment ($TiO_2$, Ground CC) | 0-10% |
| desiccant | 1-5% |
| Adhesion promoter | 1-5% |
| Thixotropic agent | 0-6% |
| Catalyst | 0-5%, preferably 0.5-5% |

The present invention also relates to compositions comprising the coated particles described above and at least one isocyanate-terminated polybutadiene prepolymer. Preferably, the compositions according to the invention comprises

- the coated alkaline-earth metal filler as described herein;
- at least one polybutadiene polymer,
- at least one isocyanate,
- optionally at least one chain extender,
- optionally at least one plasticizer, such as di-octylphtalate (DOP), di-isononylphtalate (DINP), Adipate, Sebacate,
- optionally at least one solvent, such as derivatives of hydrocarbons,
- optionally at least one filler, such as $TiO_2$, $SiO_2$, natural calcium carbonate,
- optionally at least one promoter, such as polyamines, polyamides,
- optionally at least one desiccant, such as CaO, and
- optionally further additives.

Preferred embodiments of the compositions according to the invention are summarized in Table 1B.

Table 1B

| **Components A** | **[wt.-%]** |
|---|---|
| Polybutadiene polymer | 6-50% |
| coated alkaline-earth metal filler | 0.01-50% |
| Chain extender | 0-25% |
| Plasticizer | 0-40% |
| Adhesion promoter | 0.1-5% |
| Antifoaming agent | 0-6% |
| Catalyst | 0-5%, preferably 0.5-5% |
| isocyanate | 10-50 % |

Compositions of the present invention can be supplied as a single or two-package system. When supplied as two-package, one package may contain the polybutadiene polymer, with the coated filler and optionally catalysts, additives and solvent if desired. The second package may contain the isocyanate and optionally catalysts, solvents and additives.

The present invention further encompasses a substrate provided with at least one layer of a composition according to the invention.

The present invention also encompasses the use of a coated alkaline-earth metal filler provided with a coating composition comprising at least a compound selected from the group consisting of rosin acids, organic sulfonic acids, alkylsulfates, their esters, their salts, or mixture thereof, in the production of polymer compositions containing silicon modified polymers or isocyanate-terminated polybutadiene prepolymers.

Preferably, the alkaline-earth metal filler is selected from the group comprising calcium carbonate, magnesium carbonate, barium carbonate, strontium carbonate, calcium silicate, magnesium silicate, calcium-surface-treated siliceous sand, barium sulfate, anhydrous gypsum, magnesium hydroxide, magnesium oxide, calcium phosphate powder, and mixtures of at least two thereof.

The compositions of the present invention are particularly useful as adhesives, sealants, surface coatings, fillers and for manufacturing molded parts. They can also be used as plugs, hole fillers or crack fillers. The composition can be suitable as an adhesive for plastics, metals, mirrors, glass, ceramics, mineral foundations, wood, leather, textiles, paper, cardboard and rubber, wherein the materials can each be adhered to themselves or to any other. The composition of the invention can also be used for pressure sensitive, potting compounds, coatings and binder applications.

The composition can also be suitable as a surface coating agent for plastic, metal, glass, ceramic, mineral material, wood, leather, textile, paper, cardboard and rubber surfaces.

The compositions according to the invention can be employed as constituents of adhesives, putties, laminating resins and synthetic resin cements, and in particular as constituents of adhesive and sealant for industrial objects, domestic appliances and furniture and in the shipbuilding industry, land storage tanks and pipelines and in the building industry.

These compositions can be applied, for example by brushing, spraying, rolling, dipping and the like. A particularly preferred field of use for the compositions according to the invention is adhesive and/or sealant.

These and other features of the present invention will become more apparent upon consideration of the following examples and figures.

Examples

Example 1: Evaluation of compositions according to embodiments the invention-Characterization of rheological and mechanical properties

Compositions 1.1, 1.2 and 1.3 according to embodiments of the invention were prepared by mixing a silicon modified polymer (MS polymer) with rosin coated precipitated calcium carbonate (PCC). The rheological and mechanical properties of the compositions according to the invention were compared with the properties of two reference compositions (REF1 and REF2). The REF1 composition comprised a silicon modified polymer and PCC coated with stearin (a mixture of saturated and unsaturated branched aliphatic carboxylic acids e.g. Priplus, Edenor, Pristerene, Undesa, Prifrac, Radiacid, Safacid, Cremer) as coating compound. The reference composition REF2 comprised a silicon modified polymer and PCC having a specific surface of 15 $m^2/g$, coated with a composition (30g/kg) comprising stearic acid, oleic acid, palmitic acid and lauric acid.

The rosin coated PCC having an approximate surface area between 17 and 25 $m^2/g$ were synthesized from slurry $CaCO_3$ using different amounts of rosin acid with or without fatty acids according to the process described in WO05/047372 in the name of SOLVAY SA.

Compositions according to the invention and comparative compositions were prepared using a silicon modified polymer. The silicon modified polymer was a silyl terminated polypropyleneoxide polymer. Suitable silicon modified polymer has a polypropyleneoxide as the main chain, and is terminated by dimethoxysilyl group as shown hereunder.

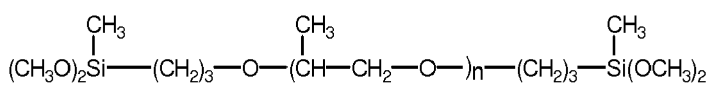

Compositions tested comprised in addition to about 40% of coated precipitated calcium carbonate as filler, the components listed in Table 2.

Table 2

| Components |
|---|
| MS Polymer |
| Pigment |
| Plasticizer |
| Desiccant |
| Adhesion Promoter |
| thixotropic agent |
| Catalyst |

The mechanical and rheological properties were measured as described hereunder:

a) Tensile stress and elongation at break:

Tensile stress and elongation at break have been determined by a traction test. The value of the force captor was 100.5 N and the captor sensibility was 100.8%. An extensometer was used. The traction properties were studied according to the norm ISO 37.

The specimens' dimensions were 25 mm x 4 mm x 3 mm. The testing speed was 200 mm/min. The preload was set to 1N. Traction was applied until breaking of the test specimens. Values average taking on five test specimens.

The adhesion properties were measured using a peeling test. The Peeling test was based on standard test performed in a tensile machine at $V_{tensile}$ = 50 mm/min. The substrate used was a polished glass plate of dimensions 76 mm x 26 mm x 1 mm. The curing time was 7 days at 23 °C. The specimens were immersed in distilled water for 7 and 20 days.

The mechanical properties of the composition REF1, REF2, 1.1, 1.2, and 1.3 are shown hereunder in Table 3.

Table 3

| MS polymer composition | REF1 | REF2 | 1.1 | 1.2 | 1.3 |
|---|---|---|---|---|---|
| % coating | 3 | 2.9 | 1.5 | 3 | 3.8 |
| Coating compound | 100 % stearin | 100% fatty acids | 100 % rosin acid | 100 % rosin acid | 16% rosin acid<br>84% fatty acids |
| Young modulus (MPa) 100 % elongation | 0.40 ± 0.05 | 0.50 | 0.67 | 0.77 | 0.20 |
| Stress at Break (MPa) | 1.5 ± 0.1 | 1.5 | 2.4 | 2.3 | 1.7 |
| Elongation at break (%) | 750 ± 150 | 500 | 600 | 560 | 1000 |
| Adhesion (N) | 35 | 30 | 63 | Not measured | 32 |

The compositions of the present invention present improved mechanical properties and high stability. The compositions according to the present invention also show improved adhesion compared to the reference examples.

b) High shear rate determination:

A Severs rheometer (ISO 4575) was used with a 6.5 mm nozzle. The pressure was set at 1 or 2 bar (gas bottle: N2). The time necessary for the complete flow, and the correspondent mass were measured. The measurements were performed at day 1 and day 14 and the results are shown in Table 4.

Table 4

| | shear rate (g/min) J+ 1 | shear rate (g/min) J + 14 |
|---|---|---|
| **REF1** | 760 | 660 |
| **REF2** | 589 | 409 |
| **1.1** | 330 | 381 |
| **1.2** | 900 | 780 |
| **1.3** | 1440 | 1760 |

At similar concentrations, the viscosity at high shear rate for the compositions 1.2 and 1.3 according to the inventions is lower (higher shear rate) than for the reference examples REF1 and REF2, which is a much desired property for application as sealant of the compositions where low viscosity at high shear rate is desired. Composition according to the invention show also better stability in time while the reference examples show reduced stability in time.

c) Low shear rate determination:

A Brookfield viscometer model RV DV I + was used with a spindle Helipath. The viscosity was measured after 2 minutes of shear at three different speeds: 2, 5, 10 rpm. The average of four measurements which present a deviation inferior to 5% was taken. Measurement of the viscosity was performed at day 1 and day 14.

The results of the low shear rate viscosity (in Pa.s) at 2 rpm measured at day 1 and day 14 for the tested compositions are shown in Table 5.

Table 5

| | J+ 1 (Pa.s) | J + 14 (Pa.s) |
|---|---|---|
| **REF1** | 1000 | 1200 |
| **REF2** | 730 | 442 |
| **1.1** | 830 | 1070 |
| **1.2** | 490 | 650 |
| **1.3** | 843 | 807 |

Low viscosity can be obtained with compositions according to embodiments of the invention comprising MS polymer and rosin coated PCC.

The viscosity at low shear rate was also measured at 5s-1 with wax. The apparatus used was a Rheometer Physica UDS 200 (Universal Dynamic Spectrometer) with a cone / plate measuring system: MK-23/197 (gap: 100 $\mu$m).

Protocol used a linear ramp from 0 s-1 to 5 s-1 for 120s, then 60 s at 5 s-1 and then linear ramp from 5 s-1 to 0 s-1 for 120 s. The results are expressed as an average of three measurements. The measurements were performed at day 1 and day 14.

Table 6 shows the results for the low shear rate viscosity (in Pa.s) using a rheometer at 5s-1 measured at day 1 and day 14 with wax and at day 1 without wax for the tested compositions.

Table 6

| Composition | J+ 1 (with wax) | J + 14 (with wax) | J + 1 (without wax) |
|---|---|---|---|
| **REF1** | 169 | 199 | 111 |
| **REF2** | 103 | 128 | 94 |
| **1.2** | 100 | 109 | nd |
| **1.3** | 114 | 127 | 105 |

Composition 1.2 shows a lower viscosity compared to REF1 and REF2. The compositions according to the invention also show better stability in time. The compositions according to the invention can be particularly useful as they can be formulated without wax, which is a costly ingredient in the preparation of MS polymers.

d) Tack free time determination:

The tack free time was determined using a Rheometer Physica UDS 200 (Universal Dynamic Spectrometer) with a MK-23/197 Cone / plate measuring system: (100 μm), and following the protocol hereunder:

Protocol :

- ■ measurement window : CSS MSPO.ORT
- ■ temperature regulated at 25 °C
- ■ increase of shear stress from 20 to 2000 Pa
- ■ measurements were performed at day 1 (D+1) and day 14 (D+ 14).

The results are summarized in Table 7 below.

Table 7

| Composition | Tack free time (minutes) |
|---|---|
| **REF1** | 70 |
| **1.1** | 80 |
| **1.2** | 250 |

The compositions according to the present invention can be tailored according to the desired application to obtain the desired Young modulus. The quantities of coated PCC used in the composition can be increased or decreased to obtain high or low modules respectively. The present invention allows the tailoring of the young modulus of the compositions according to the invention while maintaining a stable stress at break. Depending on the quantities of coated PCC used in the composition, the tack free time can also be tailored.

The present compositions give several advantages with respect to conventional sealant or putty formulations as they show improved mechanical properties. The physical properties of the compositions according to the invention include elongation and modulus (at 50% and 100% elongation) which are particularly important for sealants or putty used in the construction and transportation industries, where the need for sealants with low modulus and high elongation are essential.

Example 2: Evaluation of further compositions according to the invention - Characterization of rheological and mechanical properties

Particles of calcium carbonate with an approximate surface area of 70 $m^2/g$ were obtained according to the method described in WO03/004414 in the name of SOLVAY SA.

The precipitated calcium carbonate particles were coated with Marlon as coating compound. "Marlon" is a mixture comprising 85 wt.-% benzenesulfonic acid and 15 wt.-% toluenesulfonic acid sodium salt.

To apply the coating agent to the precipitated calcium carbonate particles, a solution or emulsion of the coating compound was added. When the coating was applied in form of a solution, the coating compound was added to a slurry of precipitated calcium carbonate at room temperature and agitated for 30 minutes before being filtered and dried in an oven. When the coating was applied in form of an emulsion, the Marlon coating compound was added to a slurry of precipitated calcium carbonate at 75-85°C and agitated for 30 minutes before being filtered and dried.

MS compositions according to embodiments of the invention were prepared by mixing a silicon modified polymer (MS polymer) with as a filler: either marlon coated PCC, or as reference (REF 1 and REF 2) stearin coated PCC. The REF 1 composition comprises a silicon modified polymer and PCC coated with 3% of stearin composed of palmitic acid and stearic acid with around 18 to 20% of oleic acid. The REF 2 composition comprises a silicon modified polymer and PCC coated with 3% of stearin composed mainly of palmitic acid and stearic acid.

- ■ The mechanical and rheological properties were measured as described in example 1.

The results are summarized in Tables 8 and 9, wherein "nd" means not determined.

Table 8

| MS compositions | % of filler in the composition | Young modulus (MPa) 100 % elongation | Stress at Break (MPa) | Elongation at break (%) |
|---|---|---|---|---|
| **REF1 (312 GICM-5690)** | 40% | 0.44 ± 0.01 | 1.61 ± 0.10 | 630.8 ± 28.7 |
| **REF2 (312V)** | 40% | 0.57 ± 0.04 | 1.71 ± 0.18 | 463.3 ± 40.3 |
| **D** | 40% | nd | nd | nd |
| **E** | 34% | 0.71 ± 0.07 | 1.64 ± 0.22 | 419.3 ± 32.5 |
| **F** | 30% | 0.66 ± 0.02 | 1.74 ± 0.06 | 418.8 ± 29.1 |
| **G** | 26% | 0.50 ± 0.02 | 1.51 ± 0.16 | 473.3 ± 45.3 |
| **H** | 20% | 0.37 ± 0.01 | 1.36 ± 0.09 | 467.5 ± 29.4 |

Table 9

| MS composition | Low shear rate J+1 Pa.s | Low shear rate J+14 Pa.s | High shear rate (g/mm) | Tack free time (min) |
|---|---|---|---|---|
| **D** | 3725 | nd | 165 | 5 |
| **E** | 1448 | 2300 | 744 | 12 |
| **F** | 681 | 1100 | 950 | 20 |
| **G** | 388 | 700 | 1523 | 38 |
| **H** | 183 | 500 | 2006 | nd |
| **REF2** | 1000 | 1400 | 1200 | 50 à 70 |

The compositions according to the present invention can be tailored according to the desired application to obtain the desired Young modulus. The concentration of the coated PCC used in the compositions can be increased or decreased to obtain high or low modules respectively. The amount of coating composition by weight of filler may also be adapted to get the required properties. The present invention allows the tailoring of the young modulus of the compositions according to the invention.

The tack free time and the curing time for the compositions of the invention can be tailored by playing on the concentration of the compositions coating the PCC used in the formulation, and also by playing on the concentration of curing agent.

## Claims

**1.** Composition comprising:

at least one silicon modified polymer or at least one isocyanate-terminated polybutadiene prepolymer comprising polybutadiene and isocyanate, and
at least one coated alkaline-earth metal filler provided with a coating composition comprising at least one coating compound selected from the group consisting of rosin acids, organic sulfonic acids, alkylsulfates, the esters, the salts or mixtures thereof,
optionally at least one additive, and
optionally at least one catalyst.

**2.** Composition according to claim 1, wherein said silicon modified polymer is selected from the group comprising silyl terminated polyether, silyl terminated polyurethane, acrylic-modified silyl terminated polyether, silyl terminated epoxy

resin, or silyl terminated polyisobutylene.

**3.** Composition according to claim 1, wherein said polybutadiene is an epoxy modified polybutadiene or a hydroxy-terminated polybutadiene,

**4.** Composition according to claim 1 or 3, wherein said at least one isocyanate-terminated polybutadiene prepolymer comprises hydroxy-terminated polybutadiene and polyisocyanate selected from the group consisting of toluene diisocyanate (TDI), 1,5-naphthalene diisocyanate, phenylene diisocyanate, diphenyl methane diisocyanate (MDI), xylene diisocyanate, isophorone diisocyanate (IPDI), and mixtures thereof.

**5.** Composition according to any of claims 1 to 4, wherein the alkaline-earth metal filler is selected from the group comprising calcium carbonate, strontium carbonate, barium carbonate, magnesium carbonate, calcium silicate, magnesium silicate, calcium-surface-treated siliceous sand, barium sulfate, anhydrous gypsum, magnesium hydroxide, magnesium oxide, calcium phosphate powder, and mixtures of at least two thereof.

**6.** Composition according to claim 5, wherein the alkaline-earth metal filler is calcium carbonate.

**7.** Composition according to any of claims 1 to 6, wherein said coating composition further comprises at least one aliphatic carboxylic acid, preferably at least one fatty acid.

**8.** Composition according to any of claims 1 to 7, wherein said coating composition further comprising at least one surfactant.

**9.** Composition according to any of claims 1 to 8, wherein the coating composition is in an amount ranging from 0.1 to 15% by weight of the alkaline-earth metal filler.

**10.** Composition according to any of claims 1 to 9, wherein said at least one coating compound is in an amount ranging from 1% to 100 % by weight of the coating composition.

**11.** Composition according to any of claims 1 to 10, wherein said coated alkaline-earth metal filler is in an amount ranging from 1 to 90% by weight of said polymer composition, preferably from 3 to 85 %, more preferably from 5 to 80% by weight of said polymer composition.

**12.** Composition according to any of claims 1 to 11, wherein said additive is selected from the group comprising abrasion resistance improvers, absorbents, rheological modifiers, plasticizers, antifoaming agents, antifouling agents, thixotropic agents, pigments, fillers, aggregates, extenders, reinforcing agents, flow control agents, catalysts, pigment pastes, mineral oils, wetting agents, adhesion promoters, thickening agents, flame-retarding agents, antioxidants, elastomers, antisettling agents, diluents, UV light stabilizers, air release agents, solvents, dispersing aids, and mixtures thereof.

**13.** Use of a composition according to any of claims 1 to 12, as an adhesive and/or sealant.

**14.** Use according to claim 13, for construction, maintenance, transportation, marine, wastewater industries.

**15.** Substrate coated with a composition according to any of claims 1 to 12.

**16.** Use of a coated alkaline-earth metal filler provided with a coating composition comprising at least one compound selected from the group consisting of rosin acids, organic sulfonic acids, alkylsulfates, their esters, their salts, or mixture thereof, in the production of polymer compositions containing silicon modified polymers, or isocyanate-terminated polybutadiene prepolymers.

**17.** Use according to claim 16, wherein the alkaline-earth metal filler is selected from the group comprising calcium carbonate, magnesium carbonate, barium carbonate, strontium carbonate, calcium silicate, magnesium silicate, calcium-surface-treated siliceous sand, barium sulfate, anhydrous gypsum, magnesium hydroxide, magnesium oxide, calcium phosphate powder, and mixtures of at least two thereof.

Europäisches Patentamt
European Patent Office
Office européen des brevets

# EUROPEAN SEARCH REPORT

Application Number
EP 08 16 3916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/092639 A1 (KASAHARA ET AL) 13 May 2004 (2004-05-13)<br>* paragraph [0118] - paragraph [0132]; claims 1,8,12,15-17; examples 13,46 * | 1,2,5,6, 10-12, 15,16 | INV.<br>C08K3/26<br>C08K9/04<br>C08L71/00<br>C08G18/69 |
| X | EP 0 952 186 A (DOW CORNING) 27 October 1999 (1999-10-27)<br>* paragraph [0006] - paragraph [0023]; claims 1-5,8; example 1 * | 1,5-7, 10-17 | |
| X | US 5 302 648 A (FUJIMOTO ET AL) 12 April 1994 (1994-04-12)<br>* column 3, line 7 - column 5, line 30; claim 1; example 1 * | 1,5,6, 10,12-17 | |
| A | US 3 821 067 A (TAYLOR ET AL) 28 June 1974 (1974-06-28)<br>* column 4, line 10 - column 7, line 38; claim 1; examples i,viii * | 1,3-7, 12-17 | |
| A | US 2 663 695 A (PERLOFF ET AL) 22 December 1953 (1953-12-22)<br>* column 2, line 30 - column 3, line 64; claims 1,2; example 1 * | 1,11 | TECHNICAL FIELDS SEARCHED (IPC)<br>C08K<br>C08G |
| A | EP 0 083 084 A (HOECHST) 6 July 1983 (1983-07-06)<br>* page 2, line 19 - page 6, line 10; claim 1; example 1 * | 1 | |

The present search report has been drawn up for all claims

3

| Place of search | Date of completion of the search | Examiner |
|---|---|---|
| The Hague | 12 January 2009 | Bourgonje, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 16 3916

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2009

| Patent document cited in search report | Publication date | Patent family member(s) | Publication date |
|---|---|---|---|
| US 2004092639 A1 | 13-05-2004 | CA 2466261 A1 | 22-05-2003 |
| | | EP 1457459 A1 | 15-09-2004 |
| | | WO 03042103 A1 | 22-05-2003 |
| | | JP 3650391 B2 | 18-05-2005 |
| | | MX PA04004579 A | 13-08-2004 |
| | | TW 283235 B | 01-07-2007 |
| EP 0952186 A | 27-10-1999 | JP 11302544 A | 02-11-1999 |
| | | US 6166121 A | 26-12-2000 |
| US 5302648 A | 12-04-1994 | JP 2784045 B2 | 06-08-1998 |
| | | JP 3017158 A | 25-01-1991 |
| US 3821067 A | 28-06-1974 | JP 1145989 C | 12-05-1983 |
| | | JP 50028598 A | 24-03-1975 |
| | | JP 57040169 B | 25-08-1982 |
| US 2663695 A | 22-12-1953 | GB 713905 A | 18-08-1954 |
| EP 0083084 A | 06-07-1983 | CA 1205941 A1 | 10-06-1986 |
| | | DE 3151814 A1 | 07-07-1983 |
| | | JP 1662366 C | 19-05-1992 |
| | | JP 3026222 B | 10-04-1991 |
| | | JP 58118844 A | 15-07-1983 |
| | | US 4456710 A | 26-06-1984 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 07116474 A
- WO 05047372 A
- WO 03004414 A


### Non-patent literature cited in the description


- **A. M. PAQUIN.** Epoxidverbindungen und Harze. Springer Verlag, 1958
- **H. LEE ; K. NEVILLE.** Handbook of Epoxy Resins. MC Graw Hill Book Company, 1982
- **C. A. MAY.** Epoxy Resins-Chemistry and Technology. Marcel Dekker, Inc, 1988
- *2002 Additives Guide, Paint & Coatings Magazine,* April 2002, 26-80